# EUROPÄISCHE PATENTSCHRIFT

(11) **EP 1 371 475 B1**
(45) Veröffentlichungstag und Bekanntmachung des Hinweises auf die Patenterteilung: **08.09.2010**
(21) Anmeldenummer: 03010347.7
(22) Anmeldetag: 08.05.2003
(51) Int. Cl.: B29C 65/74, B26D 7/20

(54) **Trennahtschweissvorrichtung**
Apparatus for makinq a joint by simultaniously welding and cutting
Appareil pour le formage d'un joint par soudage et coupage simultanés

(30) Priorität: 10.06.2002 DE 10225757; 13.07.2002 DE 10231770
(43) Veröffentlichungstag der Anmeldung: 17.12.2003
(73) Patentinhaber: Windmöller & Hölscher, D-49525 Lengerich (DE)
(72) Erfinder: Voss, Hans-Ludwig, 49545 Tecklenburg (DE); Göcker, Friedrich, 32339 Espelkamp (DE)

(56) Entgegenhaltungen:
- WO-A-02/085098
- DE-C- 576 017
- DE-C- 583 625
- GB-A- 1 487 263
- US-A- 2 598 820
- US-A- 5 094 657

## Beschreibung

Die Erfindung betrifft eine Vorrichtung zum gleichzeitigen Trennen und Schweißen von Folien oder Folienschläuchen, welche zumindest einen Schweißbalken und einen Gegenbalken aufweist.
Solche Vorrichtungen werden in der Regel eingesetzt, um aus Folienschläuchen Beutel herzustellen. Beim Schweißvorgang werden der Schweißbalken und der Gegenbalken zusammengepresst. Hierbei entsteht wie erwähnt sowohl ein Trennschnitt als auch Schweißnähte, was den Produktionsvorgang beschleunigt. Unter anderem die EP 0 888 876 B1 zeigt eine solche Trennschweißvorrichtung mit einem Schweiß- und einem Gegenbalken.
In der Regel ist der Gegenbalken von dem zu verschweißenden Material durch ein Teflonglasgewebe geschützt. Dieses Gewebe verhindert das Anhaften der Folien am Gegenbalken. In der Regel wird das Teflonglasgewebe an dem Gegenbalken vorbeibewegt. Hierbei erfolgt die Bewegung intermittierend, da das Teflonglasgewebe während des Schweißprozesses nicht bewegt werden kann.
Die Kräfte sowie die Temperaturen, denen Schweiß- und Gegenbalken ausgesetzt sind, verursachen Verschleiß. Daher werden diese Elemente oft mit Federelementen versehen, welche mit den Balken und ihren Aufhängungen verbunden sind.
Eine weitere Methode, den Verschleiß zu beschränken, besteht in der Verwendung eines drehbaren Gegenbalkens. Diese drehbaren Gegenbalken sind in der Regel als Walze ausgeformt. Zwischen zwei Trennschweißprozessen wird die Walze gedreht, so dass ein anderer Teil der Walzenoberfläche der Schweißtemperatur und dem Druck des Trennschweißprozesses ausgesetzt wird. Oft werden auch diese drehbaren Gegenbalken von einem Teflonglasgewebe gegen ein Anhaften der verschweißten Folie geschützt. Aufgrund der Drehung des beschriebenen Gegenbalkens reichtes oft aus, den Gegenbalken mit dem Teflonglasgewebe zu beschichten.

In den letzten Jahren sind alle bereits erwähnten Ausführungsformen von Gegenbalken in dem beschriebenen Anwendungsbereich mit flexiblen Dämpfungskörpern ausgestattet worden, die zumindest einen Teil der dem Schweißbalken zugewandten Oberfläche des Gegenbalkens abdecken.

Hierbei bestehen diese Dämpfungskörper in der Regel aus Silikon, Viton oder einem anderen flexiblen und temperaturbeständigen Material. Diese Materialien verringern zwar den Verschleiß der Balken, verschleißen aber selbst sehr schnell. Durch die Auswechslung dieser Dämpfungskörper oder gar des ganzen Schweißbalkens ergeben sich jedoch unerwünschte Standzeiten der Maschine.

Des Weiteren sind Vorrichtungen bekannt geworden, die Gegenbalken mit einer metallenen Oberfläche aufweisen. Die GB-A-1487263 zeigt eine solche Vorrichtung. Bei solchen Vorrichtungen hat sich jedoch gezeigt, dass die Qualität der durch sie erzeugten Schweißtrennnähte noch immer zu wünschen übriglässt.

Daher ist es Aufgabe der vorliegenden Erfindung, die Qualität der Schweißtrennnähte zu erhöhen.

Diese Aufgabe wird dadurch gelöst, dass
die dem Schweißbalken (2) zugewandte Oberfläche des Dämpfungskörpers (6) aus einem biegsamen Metall wie Federblech besteht und das biegsame Metall (13) beim Schweißtrennvorgang verformbar ist.

Wenn das verwendete Metall biegsam ist, kann zumindest ein Teil der von dem Dämpfungskörper aufzubringenden Rückstellkraft direkt von dem Metall aufgebracht werden. Vorgespannte Federbleche eignen sich in diesem Zusammenhang besonders gut. Auf der dem Schweißbalken beim Schweißprozess abgewandten Seite können Federelemente angebracht werden. Diese können alleine oder beispielsweise gemeinsam mit einem Federblech die dämpfende Wirkung und die Rückstellkraft aufbringen.

Da nun zwei Elemente (Blech und Dämpfungskörper) die Rückstellkraft aufbringen, kommt es auch zu einer Vergleichmäßigung der Rückstellkraft über die Länge des Schweißtrennschnitts. Dieser Umstand bewirkt die Qualitätsverbesserung des Schweißtrennschnitts.

Weitere Ausführungsbeispiele der Erfindung gehen aus der gegenständlichen Beschreibung und den Ansprüchen hervor.
Die einzelnen Figuren zeigen:
- Fig 1: Eine Skizze einer Schweißtrennvorrichung
- Fig 2: Einen Schnitt durch einen ersten erfindungsgemäßen Schweißtrennbalken
- Fig 3: Einen Schnitt durch einen zweiten erfindungsgemäßen Schweißtrennbalken
- Fig 4: Einen Schnitt durch einen dritten erfindungsgemäßen Schweißtrennbalken
- Fig 5: Eine Aufsicht auf den dritten erfindungsgemäßen Schweißtrennbalken

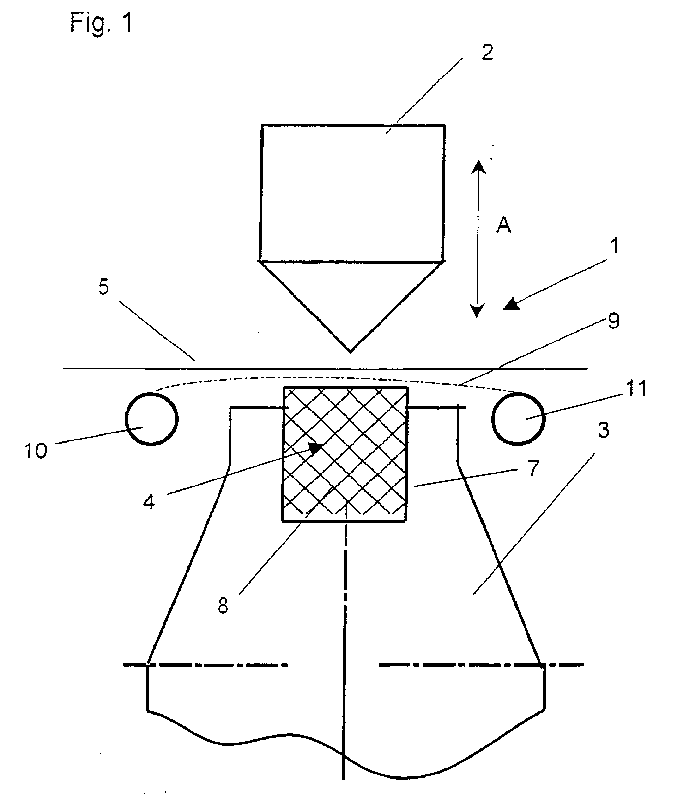

Figur 1 zeigt eine Skizze einer Trennnahtschweißvorrichtung mit einer Schweißstelle 1, welche von einem Schweißbalken 2 und einem Gegenbalken 3 definiert wird. Beide Balken sind lediglich skizziert und ausschnittweise dargestellt. Oft ist neben dem Schweißbalken auch der Gegenbalken beheizt.

In der Regel verfügt einer oder gar beide Balken 2, 3 über als Stoßdämpfer wirkende Federvorrichtungen, welche die Balken mit ihren Aufhängungen verbinden und die während des Trennschweißvorganges entstehenden Stöße abdämpfen.
In der Regel ist lediglich der Schweißbalken entlang der durch den Pfeil A skizzierten Richtung beweglich. Es ist jedoch ebenso gut möglich, beide Balken oder nur den Gegenbalken beweglich zu gestalten. Wichtig für die Funktion der Maschine Ist lediglich, dass die beiden Balken in der Höhe der Schweiß-Trennstelle eine Relativbewegung beziehungsweise Beschleunigung ausführen, welche die zum Schweißen und Trennen der Folie notwendige Kraft bereitstellt.
Darüber hinaus ist der Gegenbalken 3 mit einem flexiblen Dämpfungskörper 4 ausgestattet. Dieser Dämpfungskörper 4 besteht in der Regel aus einem flexiblen, möglichst hitzebeständigen Kunststoff wie Viton oder Silikon, welcher einem Verschleiß unterliegt. Im vorliegenden Beispiel wird eine Anhaftung von Folie 5 an dem Dämpfungskörper 4 verhindert, indem ein Teflonglasgewebe 9 zwischen der Folie und dem Dämpfungskörper hindurchgeführt wird. Dieses Teflonglasgewebe 9 wird von der Teflonglasgeweberolle 10 abgewickelt und der Teflonglasgeweberolle 11 zugeführt. Der Vorschub des Teflonglasgewebes erfolgt intermittierend, wobei das Gewebe nach einem oder mehreren Schweißvorgängen bewegt wird.

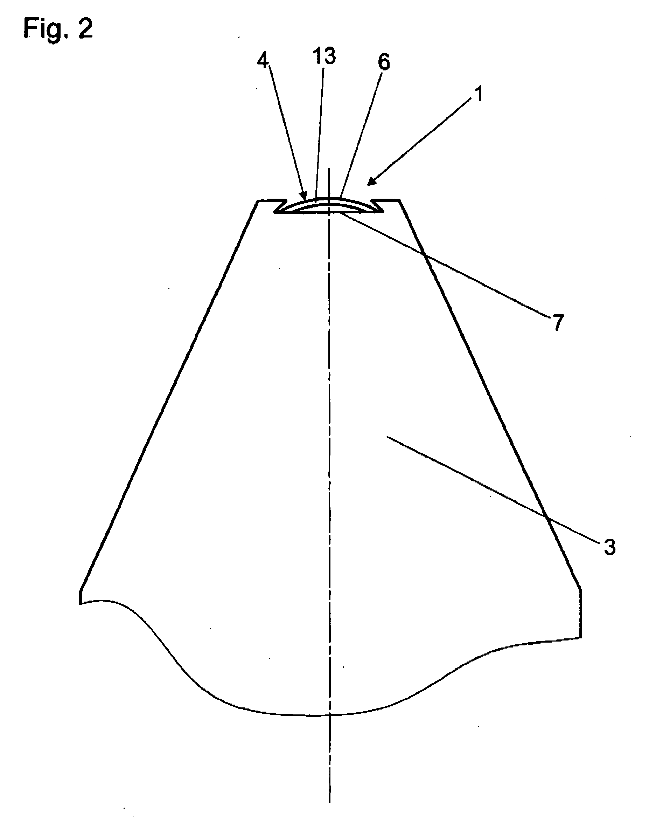

Figur 2 zeigt einen Gegenbalken einer erfindungsgemäßen Vorrichtung bei der der flexible Dämpfungskörper 4 lediglich aus einem Federblech 13 mit einer Metalloberfläche 6 besteht. Das Federblech ist bei diesem Ausführungsbeispiel der Erfindung in einer Nut 7 im Gegenbalken vorgespannt.

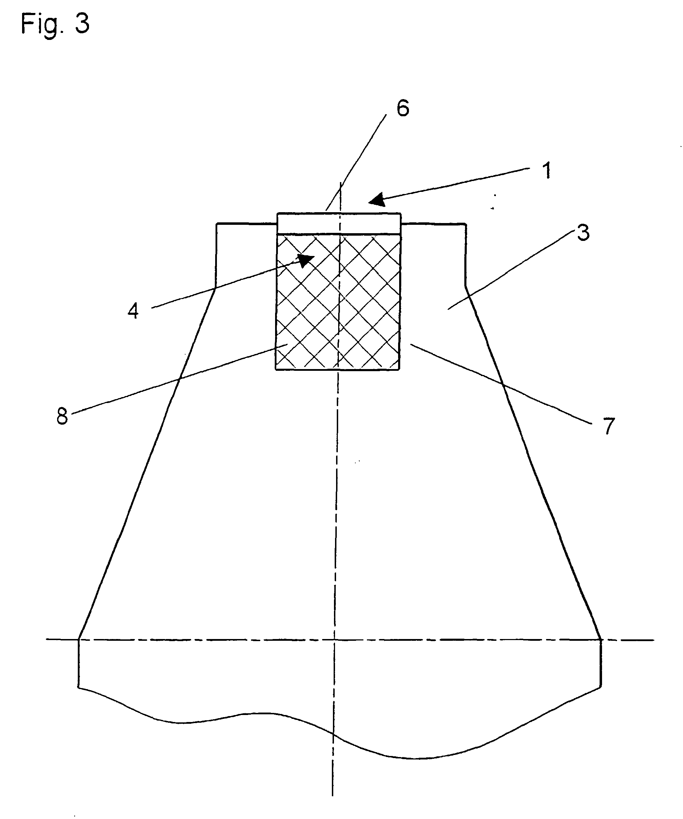

Figur 3 zeigt ein weiteres Ausführungsbeispiel der Erfindung bei dem wieder in der Nut 7 im Gegenbalken ein flexibles Material 8 einen Großteil des flexiblen Dämpfungskörpers 4 bildet. Der Dämpfungskörper besitzt auch eine Metalloberfläche 6, welch dem hier nicht dargestellten Schweißbalken zugewandt ist.
Auf die Darstellung eines Teflonglasgewebes 9 wurde in den Figuren 2 und 3 verzichtet, obwohl sich ein solches besonders vorteilhaft mit der Erfindung einsetzen läßt.

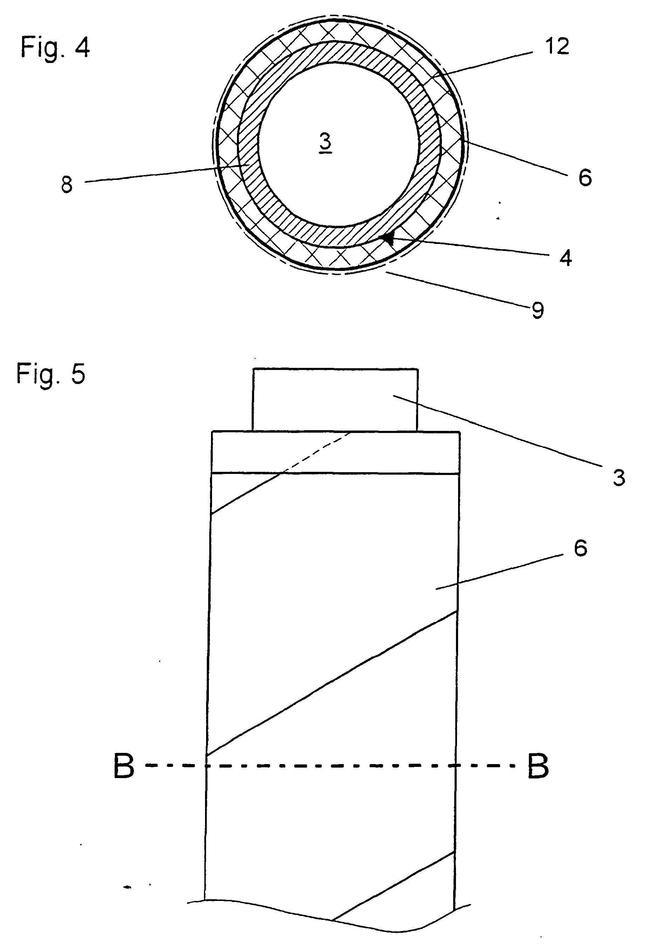

Die Figuren 4 und 5 zeigen den Gegenbalken eines anderen Ausführungsbeispiels der Erfindung, bei dem der Gegenbalken 3 drehbar gelagert ist. Wie bereits eingangs erwähnt werden diese drehbaren Gegenbalken 3 zwischen zwei Trennschweißprozessen gedreht, so dass ein anderer Teil der Balkenoberfläche der Schweißtemperatur und dem Druck des Trennschweißprozesses ausgesetzt wird. Hier ist der drehbare Gegenbalken 3 als Walze ausgeformt. Figur 4 zeigt einen Schnitt B-B durch eine solche Walze, der zeigt, dass um den drehbaren Balken 3 herum zunächst eine Schicht aus einem flexiblen Material 8 wie Silikon angeordnet worden ist. Auf dieser Schicht befindet sich eine Metallschicht 12 mit einer metallenen Oberfläche 6, welche um den ganzen Umfang des als Walze ausgebildeten Balkens 3 herumreicht. Damit ist diese Schicht auch immer beim Schweißprozess dem nicht dargestellten Schweißbalken zugewandt.

In diesem Ausführungsbeispiel ist diese Metalloberfläche 6 mit einem Teflonglasgwebe 9 versehen, welches das Anhaften von Folie 5 am Gegenbalken 2 verhindert. Figur 5 zeigt eine Aufsicht auf einen Teil des in Figur 4 bereits beschriebenen Ausführungsbeispiels. In dieser Ansicht ist lediglich das Teflonglasgewebe 9, das eine Ende des Gegenbalkens 3 und die Lage des Schnitts B-B zu erkennen.

| **Bezugszeichenliste** | |
|---|---|
| 1 | Schweiß- Trennstelle |
| 2 | Schweißbalken |
| 3 | Gegenbalken |
| 4 | flexibler Dämpfungskörper |
| 5 | Folie/Folienschlauch |
| 6 | metallene Oberfläche des Dämpfungskörpers |
| 7 | Nut im Gegenbalken 3 |
| 8 | flexibles Material |
| 9 | Teflonglasgewebe |
| 10 | Teflonglasgeweberolle |
| 11 | Teflonglasgeweberolle |
| 12 | Metallschicht |
| 13 | biegsames Blech |
| A | Pfeil in Bewegungsrichtung des Schweißbalkens |
| B | Schnittpunkte |
| | |

## Patentansprüche

1. Vorrichtung zum gleichzeitigen Trennen und Schweißen von Folien oder Folienschläuchen (5),
- welche zumindest einen Schweißbalken (2) und einen Gegenbalken (3) enthält,
- wobei zumindest ein Teil der dem Schweißbalken (2) zugewandten Oberfläche des Gegenbalkens (3) einen flexiblen Dämpfungskörper (4) aufweist,
- wobei die dem Schweißbalken zugewandte Oberfläche des Dämpfungskörpers (6) aus Metall besteht
**dadurch gekennzeichnet, dass**
- die dem Schweißbalken (2) zugewandte Oberfläche des Dämpfungskörpers (6) aus einem biegsamen Metall wie Federblech besteht
- und das biegsame Metall (13) beim Schweißtrennvorgang verformbar ist.

2. Vorrichtung nach Anspruch 1
**dadurch gekennzeichnet, dass**
das biegsame Blech (13) bereits vor dem Schweißtrennvorgang vorgespannt ist.

3. Vorrichtung nach einem der vorstehenden Ansprüche
**dadurch gekennzeichnet, dass**
flexible Dämpfungskörper (4) auf der dem Schweißbalken abgewandten Seite über ein zusätzliches Federelement (8) verfügt.

4. Vorrichtung nach Anspruch 3
**dadurch gekennzeichnet, dass**
das Federelement (8) aus einem elastischen Kunststoff wie Silikon oder Viton besteht.

5. Vorrichtung nach Anspruch 4
**dadurch gekennzeichnet, dass**
das flexible Federelement (8) bandförmig ausgeprägt ist.

6. Vorrichtung nach Anspruch 5
**dadurch gekennzeichnet dass**
das bandförmig ausgeprägte Federelement (8) und die dem Schweißbalken (2) zugewandte metallene Oberfläche (6) des Dämpfungskörpers (4) miteinander verbunden sind.

7. Vorrichtung nach Anspruch 6
**dadurch gekennzeichnet dass**
das bandförmig ausgeprägte Federelement (8) und die dem Schweißbalken (2) zugewandte metallene Oberfläche (6) des Dämpfungskörpers (4) miteinander verklebt sind.

8. Vorrichtung nach einem der vorstehenden Ansprüche
**dadurch gekennzeichnet dass**
zwischen Dämpfungselement (4) und zu verschweißender Folie (5) eine schweißhemmende Schicht (9) aus einem Material wie beispielsweise Teflonglasgewebe (9) angeordnet ist.

9. Verfahren zum gleichzeitigen Trennen und Schweißen von Folien oder Folienschläuchen (5),
- bei welchem die Trennschweißung zumindest von einem Schweißbalken (2) und einem Gegenbalken (3) vorgenommen wird,
- und zumindest ein Teil der dem Schweißbalken (2) zugewandten Oberfläche (6) des Gegenbalkens (3) mit einem flexiblen Dämpfungskörper (4) ausgestattet ist,
- die dem Schweißbalken (3) zugewandte Oberfläche des Dämpfungskörpers (4) aus Metall besteht
**dadurch gekennzeichnet, dass**
- ein biegsames Metall wie Federblech als die dem Schweißbalken (2) zugewandte Oberfläche des Dämpfungskörpers (6) verwendet wird
- und das biegsame Metall (13) während des Schweißtrennvorganges verformt wird.

## Claims

1. Apparatus for simultaneously separating and welding films or tubular films (5),
- which includes at least one welding bar (2) and an opposing bar (3),
- at least part of the surface of the opposing bar (3) that is facing the welding bar (2) having a flexible damping element (4),
- the surface of the damping element (6) that is facing the welding bar consisting of metal,
**characterized in that**
- the surface of the damping element (6) that is facing the welding bar (2) consists of a flexible metal such as spring sheet
- and the flexible metal (13) is deformable during the welding-and-separating operation.

2. Apparatus according to Claim 1, **characterized in that** the flexible sheet (13) is already prestressed before the welding-and-separating operation.

3. Apparatus according to one of the preceding claims, **characterized in that** the flexible damping element (4) has on the side facing away from the welding bar an additional spring element (8).

4. Apparatus according to Claim 3, **characterized in that** the spring element (8) consists of an elastic plastic such as silicone or Viton.

5. Apparatus according to Claim 4, **characterized in that** the flexible spring element (8) is made in the distinctive form of a band.

6. Apparatus according to Claim 5, **characterized in that** the spring element (8) made in the distinctive form of a band and the metal surface (6) of the damping element (4) that is facing the welding bar (2) are connected to each other.

7. Apparatus according to Claim 6, **characterized in that** the spring element (8) made in the distinctive form of a band and the metal surface (6) of the damping element (4) that is facing the welding bar (2) are adhesively bonded to each other.

8. Apparatus according to one of the preceding claims, **characterized in that** a welding-inhibiting layer (9) of a material such as for example Teflon glass fabric (9) is arranged between the damping element (4) and the film (5) to be welded.

9. Method for simultaneously separating and welding films or tubular films (5),
- in which the separating-and-welding is performed at least by a welding bar (2) and an opposing bar (3),
- and at least part of the surface (6) of the opposing bar (3) that is facing the welding bar (2) is provided with a flexible damping element (4),
- the surface of the damping element (4) that is facing the welding bar (3) consists of metal,
**characterized in that**
- a flexible metal such as spring sheet is used as the surface of the damping element (6) that is facing the welding bar (2)
- and the flexible metal (13) is deformed during the welding-and-separating operation.

## Revendications

1. Dispositif de coupe et de soudage simultanés de feuilles ou de gaines en feuille (5),
- qui contient au moins une mâchoire d'appareil à souder (2) et une contre-mâchoire (3),
- où au moins une partie de la surface de la contre-mâchoire (3) orientée vers la mâchoire (2) comporte un corps d'amortissement flexible (4),
- où la surface du corps d'amortissement (6) orientée vers la mâchoire est réalisée en métal,
**caractérisé en ce que**
- la surface du corps d'amortissement (6) orientée vers la mâchoire (2) est réalisée en un métal flexible comme de la tôle à ressort
- et le métal flexible (13), lors de l'opération de soudage et de coupe, est déformable.

2. Dispositif selon la revendication 1, **caractérisé en ce que** la tôle flexible (13), déjà avant l'opération de soudage et de coupe, est précontrainte.

3. Dispositif selon l'une des revendications précédentes, **caractérisé en ce que** le corps d'amortissement flexible (4), au côté éloigné de la mâchoire, dispose d'un élément de ressort additionnel (8).

4. Dispositif selon la revendication 3, **caractérisé en ce que** l'élément de ressort (8) est réalisé en un matériau synthétique élastique comme le silicone ou vitone.

5. Dispositif selon la revendication 4, **caractérisé en ce que** l'élément de ressort flexible (8) est frappé en forme de bande.

6. Dispositif selon la revendication 5, **caractérisé en ce que** l'élément de ressort frappé en forme de bande (8) et la surface métallique (6) du corps d'amortissement (4) orientée vers la mâchoire à souder (2) sont reliés.

7. Dispositif selon la revendication 6, **caractérisé en ce que** l'élément de ressort frappé en forme de bande (8) et la surface métallique (6) du corps d'amortissement (4) orientée vers la mâchoire à souder (2) sont assemblés par collage.

8. Dispositif selon l'une des revendications précédentes, **caractérisé en ce qu'**il est disposé entre l'élément d'amortissement (4) et la feuille à souder (5) une couche (9) inhibant le soudage en un matériau comme par exemple le tissu de verre textile en téflon (9).

9. Procédé de séparation et de soudage simultanés de feuilles ou de gaines en feuille (5),
- dans lequel la coupe-soudage est exécutée au moins par une mâchoire à souder (2) et une contre-mâchoire (3),
- et au moins une partie de la surface (6) de la contre-mâchoire (3) orientée vers la mâchoire à souder (2) est munie d'un corps d'amortissement flexible (4),
- la surface du corps d'amortissement (4) orientée vers la mâchoire à souder (3) est en métal,
**caractérisé en ce qu'**un métal flexible, comme de la tôle à ressort, est utilisé comme surface du corps d'amortissement (6) orientée vers la mâchoire à souder (2),
- et le métal flexible (13), pendant l'opération de soudage-coupe, est déformé.
